# EUROPEAN PATENT APPLICATION

(11) **EP 1 063 848 A1**
(43) Date of publication of application: **27.12.2000**
(21) Application number: 00305343.6
(22) Date of filing: 23.06.2000
(51) Int. Cl.: H04N 7/16

(54) **Control system for electrical apparatus**

(30) Priority: 25.06.1999 GB 9914766
(71) Applicant: Pace Micro Technology PLC, Saltaire, Shipley, BD14 3LF (GB)
(72) Inventor: Tibbs, Vince, Devon PL5 3DY (GB); Fern, Tim, High Birstwith, Harrogate HG3 2LH (GB)
(74) Representative: Wood, Graham

(57) **Abstract**

The invention provides electrical apparatus such as a receiver for broadcast data and which processes the data and generates of audio and/or video therefrom and which can be used in connection with or integrally with a television set The receiver can be controlled to operate in accordance with a set of user definable parameters. The parameters arc controlled by a control system provided in conjunction with the receiver and the control system includes a memory means in which at least one set of user definable operating parameters can be entered and stored by a user and/or users of the receiver and the receiver operates in accordance with the selected set of parameters at least during the immediate period of operation. Means for controlling access to the memory means to enable a selection of the parameter sets can be provided.

## Description

The invention which is the subject of this application is a means for controlling the use of electrical apparatus such as, but not necessarily exclusively, apparatus in the form of a broadcast data receiver for use in receiving broadcast data such as a satellite, cable or terrestrial digital data. In particular, the control system is provided to allow control of access to the apparatus by a person or persons who are required to identify themselves and to provide a means whereby user specified operating parameters relating to a user or users for the apparatus can be held for subsequent selection.

The use of television sets and means for receiving data from which television programmes can be generated on the display screens in premises, is widespread and, furthermore, it is found that most occupiers of a premises will use a television, albeit at different degrees of frequency, through time. It is also known that the particular television programmes which are watched in a premises vary from person to person in response to their personal preferences and, it is also known that other persons in the premises may regard some of the subject matter of some of the programmes as being unsuitable for other persons in the premises. This normally occurs when parents wish to control the use of the television set and viewing of programmes by their children. Parents may also be of the opinion that their children watch too much television and currently they tend to govern their child's viewing time by telling them they have watched sufficient television and turning the same off and telling them to go and do something else. However this can cause arguments and distress and, at present, it is necessary for the parent to remember how long the child has been watching and take action and one of the problems is that the actions taken may not be consistent so that the child becomes confused. The same problems and actions can be required for the playing of games on games consoles, the use of personal computers and the like.

Another problem is that at the present time, the broadcast data receiver, while it can store preferences for particular channels, can allow the storage of particular times for showing programmes and so on, can only do so in respect of the requirements of all of the users in combination. This means that there is always required to be some form of consultation and discussion between the various members of the premises as to how to install and set up the set top box so as to operate in a manner which pleases all persons in the premises. This can lead to conflict and, in many instances, the set top box does not operate to the full satisfaction of any of the persons in the premises.

An aim of the present invention is to provide a means whereby operating conditions and parameters for electrical apparatus can be determined in respect of a particular user rather than in respect of all users in combination premises and, as part of this, to allow control of viewing or other aspects of the function of the receiver and/or television to be controlled for certain users.

In a first aspect of the invention there is provided an item of electrical apparatus for the processing of video, audio and/or auxiliary data, and for the generation of audio and/or video and/or auxiliary data therefrom, said apparatus controlled to operate in accordance with a range of user definable parameters, said parameters controlled by a control system provided in conjunction with the apparatus and characterised in that the control system includes; a memory means in which at least one set of operating parameters for the apparatus can be entered and stored by a user and/or users of the apparatus, and upon user selection of a stored set of operating parameters the apparatus operates in accordance with the selected set of operating parameters; and a means for controlling access to the memory means to enable a selection of the set of operating parameters.

In one embodiment, the memory means can be compartmentalised or alternatively, a number of memory means are provided and in any case each user of the apparatus can be allocated a memory means or a compartment of the same and hereinafter referred to as a compartment of memory means so that each user can enter a set of operating parameters for the apparatus which is defined and selectable by them.

Typically the electrical apparatus is a broadcast data receiver and sets of operating parameters can be held in the memory means for each user. The sets of operating parameters can vary from user to user and can include any combination of permissible times for viewing, permissible subject matter for viewing, permissible channels for viewing, preferences in terms of channels to be watched and listed, a listing of channels relating to specified subject matter to be displayed, and so on. Each user can enter and store parameters which suit their particular requirements so that when the user comes to use the television set and/or receiver, the receiver will operate and provide functions as specified and required by that particular user.

It is envisaged that the receiver or any electrical apparatus will operate in accordance with the selected set of criteria until the said set is deselected by the user and another set selected or the apparatus is switched off. Thereafter, the operation of the apparatus can revert to a default set of operating parameters unless otherwise instructed by the user.

Typically, access to the memory means can be achieved by the user identifying their set of operating parameters by entering access criteria. This may be by any suitable form but it is envisaged that one option, when security is not of concern, is to enter into the apparatus the user's name, initials or other means of identifying them whereby the input of the appropriate name will allow the parameters held in a particular compartment of the memory means which match that identity, to be used for the television set and receiver operation.

An alternative arrangement when security may be of concern, is to provide each user with access criteria in the form of a personal password or pin number to be entered or alternatively a Smartcard or magnetic strip card can be used. Typically the means for identifying the user will be known only to the user. It is envisaged that this will be of particular use when the apparatus is for use by a family and the children in the family will only know their own identifying code which, when they input the same into the apparatus, will allow them to watch programmes which are deemed to be suitable for them, said programmes and operating parameters having been previously determined by their parents. The children however will not be aware of their parent's pin number and therefore will not be able to operate the apparatus in accordance with parameters held in the memory means for their parents.

One operating parameter which may be included in a set of operating parameters for a particular user is the number of viewing hours by that user, typically a child, over a particular time period and the operating parameter may be that if the child accesses the apparatus to use the same, a timer then records the time for which the child watches the television which is say connected to a receiver and, if the time recorded matches or exceeds a predetermined time period, the television set and/or receiver may be switched off thereby preventing the child from watching the television any further, or, alternatively a particular channel may be switched off or so on.

It should be appreciated that all of these features of the system can be adopted in respect of other forms of electrical apparatus such as for example a games console, personal computer or other device and therefore allows the control of the same in a particular manner to be provided in accordance with particular parameters set by various users of the apparatus.

A specific embodiment of the invention is now described with reference to the accompanying drawings, wherein:-
Figure 1 illustrates a control system in accordance with the invention in schematic form; and
Figure 2 illustrates in schematic form the use of the control system in accordance with the invention by one user of electrical apparatus.

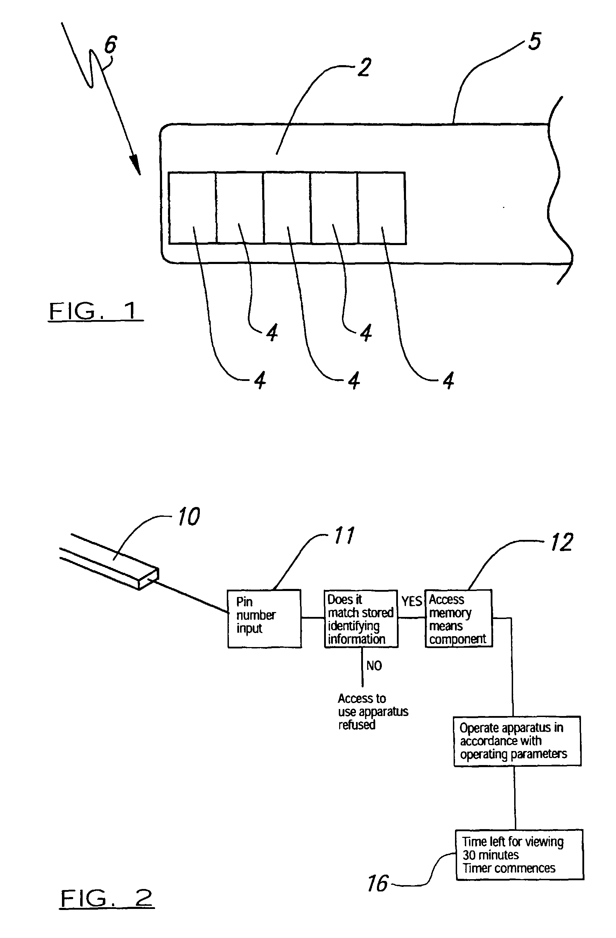

Referring firstly to Figure 1, there is illustrated part of a control system for electrical apparatus in accordance with the current invention whereby the control system includes a memory means 2 split into a number of compartments or segments 4. In the example described, the control system as described is part of the control system for a broadcast data receiver 5, commonly known as a set top box, which is capable of receiving incoming signals 6, decoding and processing same and then generating a visual and/or audio display via a display screen such as that of a television set. When the broadcast data is received, it can be processed in a number of ways in accordance with operating parameters such as to provide different picture formats on the display screen, various types of information can be transmitted which may or may not be processed including the selection of particular channels of interest, display of information relating to particular channels of interest and so on and there are many operating parameters which can be selected both for the receiver and/or the television set display screen such as colour, contrast, brightness, volume. However, it is frequently the case that a television set and receiver provided in a premises such as a house are used by a number of different users, each of whom has their own preferences, interests and so on. At the present time it is not possible to control the operation of the receiver in respect of a particular person's preferences unless they adjust and enter the required operating parameters each time they use the apparatus.

The use of the control system as illustrated in Figure 1, ensures that each user of the receiver is provided with a compartment of a memory means and, in that memory means compartment, the operating parameters for the receiver which are selected by the user are memorised such that, when the receiver is subsequently used by that person, and they identify themselves to the receiver, the appropriate operating parameters for the television set and receiver are used. This allows each user to have the receiver automatically operating in accordance with their selected and previously stored operating parameters thereby adding to their enjoyment.

Figure 2 illustrates one embodiment of the invention in use wherein the control system is set up for use by 4 persons, namely a mother, father and 2 children. Each person has an identification means and access criteria which, in this embodiment is a pin number, and so, for example, if one of the children wishes to use the television set and receiver, they are required to identify themselves to the apparatus by inputting their pin number, typically via a remote control unit as indicated by box 11. If the pin number is recognised and matches with those stored in the memory means, the control system 12 will access the appropriate memory means compartment and address the set of operating parameters for the child, typically previously stored by the parents, and which set is held in that compartment. These parameters may include any of, for example, favourite channels to be watched, channels which cannot be watched by the child, particular programmes which cannot be watched and so on and it is also possible, especially with children, for parents to set parameters such as the permissible time for watching TV by the child over a specified period.

In this example the operating parameters are set to define the channels which can be viewed by the child and this controls the television receiver to only allow viewing of the specified channels and a further parameter is that the viewing time per day may only be 2 hours. Thus, in the example shown, in box 16, when the child in question starts watching, they have already watched the TV for 1½ hours in that day and this is held in the memory and when the child accesses the memory to recommence viewing a clock starts counting. The receiver is then provided to display the predetermined available channels. If the child continues to watch television for more than 30 minutes then the recorded time will be greater than 2 hours maximum limit for that day and so the television and/or receiver are caused to switch off by the control means in accordance with the parameters which are held in that child's operating parameters in the memory means. In this instance, it would be an advantage for the pin numbers of the parents to be kept secret from the children so that, the children cannot override the system by alternatively using the operating parameters of the parents settings without the parents knowledge.

It is also possible that the system described can be used to control the viewing of a limited number of channels and to have each channel viewable for a specified period of time i.e. a child may be allowed to watch the following channels for periods of time set by their parents such as Disney channel for 2 hours plus Nickelodeon for 2 hours. If the allotted time elapses on Nickelodeon and there is still an hour left on Disney the child may continue to watch Disney until the remaining time has elapsed. In addition, there may be displayed on screen a indication of the time and channel status which could be used to indicate the remaining time available for channels which can be watched.

In a further feature of the invention a set of operating parameters can be generated by the broadcast data provider from a remote location by broadcasting appropriate data to the receiver whereupon the operating parameters in the set can be provided to enhance the effect of a particular programme or service or may be provided to control particular programme or channel services which can be watched by designated users and which particular programmes and/or channel services can be selected by or for specific users.

Thus there is provided a control system adaptation which allows the operation of a receiver, television set or electrical apparatus to be controlled in accordance with particular user requirements rather than in accordance with a number of users and for the operating parameters to be set, amended and stored for subsequent use. It also allows a means of restricting usage of the apparatus in respect of particular persons such as children so as to prevent their unauthorised use of the apparatus.

## Claims

1. An item of electrical apparatus for the processing of video and/or audio and/or auxiliary data, and for the generation of audio and/or video and/or auxiliary data therefrom, said apparatus controlled to operate in accordance with a range of user definable parameters, said parameters controlled by a control system provided in conjunction with the apparatus and characterised in that the control system includes; a memory means in which at least one set of operating parameters for the apparatus can be entered and stored by a user and/or users of the apparatus, and upon user selection of a stored set of operating parameters the apparatus operates in accordance with the selected set of operating parameters; and a means for controlling access to the memory means to enable a selection of the set of operating parameters.

2. An item of electrical apparatus according to claim 1 characterised in that the memory means is compartmentalised to receive a number of operating parameter sets.

3. An item of electrical apparatus according to claim 1 characterised in that a number of memory means are provided, each allocated to a user of the apparatus.

4. In item of electrical apparatus according to claim 1 characterised in that the apparatus is a broadcast data receiver connected to or integral with a television set.

5. A receiver according to claim 4 characterised in that the sets of parameters held in the memory means for each user can include any, or any combination, of; permissible times for viewing; permissible subject matter for viewing; permissible channels for viewing; preferences in terms of channels to be watched and listed; a listing of channels relating to specified subject matter to be displayed.

6. An item of electrical apparatus according to claim 1 characterised in that the user generates and selects to store a set of operating parameters in response to a series of options displayed on a screen.

7. An item of electrical apparatus according to claim 1 characterised in that access to the memory means can be achieved by the user confirming their identity in comparison to stored access criteria.

8. An item of electrical apparatus according to claim 7 characterised in that access is made by correctly entering access criteria in terms of the user's name, initials or other means of identification whereby the matching of the input criteria with access criteria held in memory allows a set of parameters to be identified and used in the operation of the apparatus.

9. An item of electrical apparatus according to claim 7 characterised in that access is controlled by providing each user with access criteria in the form of a password or PIN number.

10. An item of electrical apparatus according to claim 7 characterised in that access is controlled by providing each user with access criteria in the form of a card bearing identification details and which can be inserted or "swiped" into means for reading the data.

11. An item of electrical apparatus according to claim 1 characterised in that apparatus is a broadcast data receiver and the set of operating parameters utilises a timer to record the time for which a user watches a television set connected to or provided integrally with the receiver and, if the time recorded matches or exceeds a predetermined time period of the parameter set, the television set and/or receiver and/or channel is switched off.

12. An item of electrical apparatus according to claim 1 characterised in that the apparatus operates in accordance with the user selected set of operating parameters until the apparatus is next switched off.

13. An item of electrical apparatus according to claim 12 characterised in that on the next occasion of use of the apparatus the apparatus reverts to a default set of operating parameters.

14. An item of electrical apparatus according to claim 12 characterised in that differing sets of operating parameters are user selected during a period of operation of the apparatus.
